# EUROPÄISCHE PATENTSCHRIFT

(11) **EP 1 622 785 B1**
(45) Veröffentlichungstag und Bekanntmachung des Hinweises auf die Patenterteilung: **17.09.2008**
(21) Anmeldenummer: 04739152.9
(22) Anmeldetag: 07.05.2004
(51) Int. Cl.: B60H 1/00

(54) **STÖMUNGSLEITEINRICHTUNG FÜR LUFTKANÄLE**
AIR CHANNEL FLOW GUIDING DEVICE
DISPOSITIF DE GUIDAGE D'ECOULEMENT POUR CANALISATIONS D'AIR

(30) Priorität: 07.05.2003 DE 10320645
(43) Veröffentlichungstag der Anmeldung: 08.02.2006
(73) Patentinhaber: Behr GmbH & Co. KG, 70469 Stuttgart (DE)
(72) Erfinder: KOMOWSKI, Michael, 71265 Weil der Stadt (DE)
(74) Vertreter: Grauel, Andreas
(86) Internationale Anmeldenummer: PCT/EP2004/004921
(87) Internationale Veröffentlichungsnummer: WO 2004/098924

(56) Entgegenhaltungen:
- EP-A- 1 070 611
- FR-A- 2 480 685
- US-A- 3 807 631
- US-A1- 2002 028 649

## Beschreibung

Die vorliegende Erfindung betrifft eine Strömungsleiteinrichtung, wie sie allgemein bekannt ist.

In Luftkanälen werden Klappen verwendet, um abwärts der Klappe gelegene mehrflutige Strömungsleitungen zu schalten. Die Klappen können dabei einerseits einer kontinuierlich variablen Verteilung der Luftströme zwischen den stromabwärts gelegenen Fluten oder aber auch einem vollständigen alternierenden Umschalten des Fluidpfades des Luftstromes zwischen den verschiedenen Fluten dienen.

Dabei weisen entsprechend ausgebildete Klappen Dichteinrichtungen auf, die in Zusammenwirken mit an den Strömungsleiteinrichtungen vorhandenen Durchströmöffnungen eine dichte Anlage ausbilden können, so dass Fluten fluiddicht abschließbar sind.

Derartige Klappen zum Steuern der Kanäle beanspruchen in Durchströmrichtung der Luft eine bestimmte Baulänge. Diese Baulänge wird im Wesentlichen bestimmt durch die Abmessungen der Klappe sowie den zum Verstellen der Klappe in verschiedene Stellungen erforderlichen Bauraum. Darüber hinaus ist der hierbei erforderliche Bauraum davon abhängig, wie groß die Klappe ausgebildet ist. Je größer die Klappe ausgebildet ist, desto länger ist der für die Klappe erforderliche Schwenkraum. Es ist allerdings so, dass große Klappengrößen den Vorteil haben, dass der Querschnitt abdeckbarer Durchströmöffnungen mit der Klappengröße zunimmt. Die Gestaltung möglichst großer Kanalquerschnitte bei Luftleitungen liegt darin, dass bei gleichem Volumenstrom dann eine geringere Strömungsgeschwindigkeit des Luftstromes erforderlich ist. Dies ermöglicht eine bessere Bereitstellung laminarer Luftströmungen, die wesentlich weniger Strömungsgeräusche verursachen als turbulente Strömungen. Grundsätzlich ist bei Strömungsleiteinrichtungen das Entstehen von Strömungsschall zu vermeiden, da dieser zusammen mit dem austretenden Luftstrom in den belüfteten Raum übertragen wird.

Andererseits ist die Inanspruchnahme großer Bauräume für Schalteinrichtungen auch störend. Nicht immer steht in den Bereichen, in denen eine schaltbare Strömungsführung vorzustehen ist, große Bauräume und freie Strömungslängen zur Verfügung, die es erlauben, eine Klappe großer Größe anzuordnen.

Diese Problematik tritt insbesondere im Bereich von Fahrzeugbelüftungs-und Klimatisierungseinrichtungen auf. In Fahrzeugen stehen oft nur kleine Bauräume zur Verfügung. Die Einrichtungen, die zur Belüftung und Klimatisierung eines Fahrzeuges verwendet werden, sollen möglichst klein bauend und kompakt ausgebildet sein. Dabei ist es bei Klimaanlagen in Fahrzeugen üblich, den eintretenden Luftstrom zunächst insgesamt über einen Verdampfer zu führen, der den Luftstrom herunterkühlt und entfeuchtet. Es wird ein zur Klimatisierung des Fahrzeuginnenraumes möglichst einfach zu definierender Ausgangszustand des anströmenden Luftstroms erzeugt. An den Verdampfer schließt sich im Strömungsweg des Luftstromes nun eine Bypassleitung an, die an einem Heizkörper vorbeiführt, parallel zu dieser Bypassleitung liegt der Strömungspfad oder die Flut, die durch den Heizkörper hindurchführt. Mittels schaltbarer Klappen wird die vom Verdampfer anströmende, hinsichtlich Temperatur und Feuchtigkeit konditionierte Luft in Teilströme aufgeteilt, die sich auf die beiden Fluten verteilen. Stromabwärts des Heizkörpers und eventuell anderer Einrichtungen werden die beiden Fluten wieder zusammengeführt und die beiden Teilströme werden miteinander vermischt. Durch die Stellung der den Luftstrom in Teilströme aufteilenden Klappen wird die Temperatur und Luftfeuchtigkeit des entstehenden Mischstromes konditioniert. Dabei wird durch die Klappenstellung die Aufteilung des Verhältnisses der beiden Teilströme zueinander verändert. Gerade bei derartigen Anordnungen ist der zwischen dem Verdampfer und dem Heizkörper benötigte Bauraum möglichst gering zu halten. Innerhalb dieses Bauraumes muss die Klappe angeordnet werden und ihre Funktion als Steuerelement für die Aufteilung in Teilluftströme wahrnehmen können.

Die EP1 070 611 A1 zeigt eine Klimaanlage für ein Fahrzeug, bei welcher eine Mischklappe zusammengesetzt ist aus einem L-förmigen Klappenteil und einem zweiten, ebenen Klappenteil, die über ein Scharniergelenk miteinander verbunden sind. Ein Luftstrom, welcher von einem Verdampfer gekühlt wird, kann über einen Heizkörper oder über einen, diesen umgehenden Kanal, einem Kaltkanal, in einen Mischraum geleitet werden. Der jeweilige durchtretende Luftmassenstrom wird über die Stellung der Mischklappe eingestellt.

Aufgabe der Erfindung ist es, eine Strömungsleiteinrichtung mit einer Klappe für Luftkanäle zu schaffen, die ein Schalten oder ein Aufteilen eines Luftstromes auf bzw. zwischen mehreren Fluten ermöglicht und andererseits eine möglichst geringe Strömungslänge in Strömungsrichtung des Luftstromes beansprucht.

Die Aufgabe wird durch eine mehrflutige Strömungsleiteinrichtung gemäß dem Anspruch 1 gelöst.

Eine Klappe findet Verwendung für Luftkanäle, in denen stromabwärts der Klappe eine mehrflutige Strömungsleitung ausgebildet ist, wobei die einzelnen Fluten durch Strömungsleitmittel begrenzt und voneinander getrennt werden. Die Fluten weisen eine Durchströmöffnung auf. Die Klappe weist eine Schwenkachse auf, welche der schwenkbaren Halterung der Klappe in dem Gehäuse, in dem die mehrflutige Strömungsleitung erfolgt, dient. An der Klappe sind Dichteinrichtungen zur luftdichten Anlage an wenigstens einer Durchströmöffnung ausgebildet. Die Klappe dient dem schaltbaren Leiten der Luftströmung bezüglich der mehreren Fluten. Gemäß der Erfindung ist die Schwenkachse der Klappe randständig ausgebildet, wobei von ihr transversal die Klappe abragt und in zwei hintereinander liegende Klappensegmente gegliedert ist. Jedes der Klappensegmente weist wenigstens eine Dichteinrichtung zur luftdichten Anlage an eine Durchströmöffnung auf. Die Klappe weist eine in Anordnungsrichtung der Klappensegmente hintereinander insgesamt gesehen konkav gekrümmte Kontur auf.

Durch die Gestaltung der Klappe gemäß der Erfindung wird es erreicht, dass die schwenkbare Anordnung der Klappe und der für die Schaltbarkeit zwischen den Fluten erforderliche in Strömungsrichtung beanspruchte Bauraum möglichst gering gehalten wird. Es wird also insbesondere ermöglicht, eine solche Klappe so anzuordnen, dass ein in Strömungsrichtung gesehen geringer Abstand zwischen einzelnen Funktionselementen beansprucht wird. Es werden also insbesondere in Strömungsrichtung sehr kurz bauende Schaltbereiche ermöglicht.

Gemäß einer vorteilhaften Ausgestaltung der Erfindung weist jedes Klappensegment genau eine Dichteinrichtung zur luftdichten Anlage an einer Durchströmöffnung auf. Gemäß vorteilhafter Weiterbildung sind die Dichteinrichtungen auf voneinander verschiedenen Seiten der Klappe angeordnet. Vorzugsweise weist das zur Schwenkachse distale Klappensegment die Dichteinrichtung auf der innen liegenden Seite der insgesamt konkaven Kontur auf. Der Vorteil solcher Anordnungen liegt dabei in der einfachen und platzsparenden Gestaltung der Klappe hierdurch. Liegt die Dichteinrichtung des proximalen Klappensegments auf der Außenseite der konkaven Kontur, so kann in einer bezüglich der Strömungsrichtung des Luftstroms schräg stehenden Stellung zum einen eine gute Strömungsleitung über der Fläche der Klappe erfolgen und zum anderen auch eine gute Aufteilung des anströmenden Luftstromes in Teilströme. Es ist dabei insbesondere möglich, dass die eine Flut, von der die Durchströmöffnung mit dem distalen Klappensegment und der darauf angeordneten Dichteinrichtung, welche sich bezüglich der konkaven Krümmung innenseitig befindet, abgedeckt wird, in den dann von der Klappe sozusagen eingeschlossenen Raum hineinragt und damit der Position der Durchströmöffnung des Bypasskanales vorgelagert ist. Insbesondere diese Möglichkeit führt zu sehr kurzbauenden Ausführungsformen in Strömungsrichtung.

Gemäß vorteilhafter Ausgestaltung der erfindungsgemäßen Klappe ist die Kontur der Klappe im Wesentlichen ellipsoid ausgebildet. Die ellipsoide Ausbildung ermöglicht es, eine kontinuierliche Krümmung der Klappe über ihre gesamte Erstreckung aufrecht zu erhalten. Gemäß weiterführender Ausgestaltung ist dabei der Bereich größerer Krümmung am distalen Ende der Klappe ausgebildet. Dieser Bereich ist einem Klappenelement zugehörig, wobei in diesem Klappensegment in die Kontur der Ellipse eine im Wesentlichen plan ausgerichtete Dichteinrichtung einbeschrieben ist. Dabei sind vorzugsweise laterale Seitenwände vorgesehen, die an den bezüglich der Erstreckung der Schwenkachse seitlichen Enden die Dichteinrichtung mit dem Klappensegment verbinden.

Eine weitere Ausgestaltung der Erfindung sieht vor, dass die Klappensegmente zueinander in einem Winkel stehen. Die einzelnen Klappensegmente sind dabei vorzugsweise plan ausgebildet und weisen einerseits eine Dichteinrichtung auf. Die Klappensegmente sind dabei zueinander so winklig angeordnet, dass der Innenwinkel kleiner als 180° ist um die konkave Kontur aufrecht zu erhalten. Gemäß bevorzugter Ausgestaltung ist dabei der Innenwinkel kleiner als 120° und liegt insbesondere im Bereich von ca. 90°. Eine möglichst weitgehende Annäherung an einen Innenwinkel von 90° ermöglicht in der Regel besonders kurzbauende Anordnungen, bei denen Funktionselemente einer Strömungsflut weit in den Schwenkbereich der Klappe hineinragen können. Dabei ist diese Länge insbesondere durch die Erstrekkungslänge des proximalen axialen Elementes vorgegeben. Die Länge des distalen Klappensegmentes bestimmt dabei dann den Abstand, der zwischen dem Beginn der zugeordneten Flut und dem stromaufwärts gelegenen Ende vorangegangener Bauteile liegen muss, damit eine passende Schwenkbewegung ausgeführt werden kann. Weiterbildende Ausgestaltungen planer Plattensegmente können vorsehen, dass diese im Bereich der Innenfläche eine Wölbung aufweisen, wobei diese Wölbung vorzugsweise zylindermantelförmig ausgebildet sein kann.

Gemäß anderer Weiterbildung der Erfindung ist vorgesehen, dass die Klappe im Mehrkomponentenspritzgussverfahren hergestellt ist, wobei die Dichteinrichtung als Dichtprofil bzw. Dichtlippe ausgebildet ist und einstückig an den restlichen Körper der Klappe angespritzt ist. Die Dichtprofile bzw. Dichtlippen sind zur dichtenden Anlage an strömungsleitmittelseitig ausgebildeten Dichtflächen bestimmt. Hierbei ist es insbesondere möglich, dass durch kontinuierliche Veränderung der Beigabe von Weichmachern die Dichteinrichtung aus dem prinzipiell gleichen Material wie die Klappe hergestellt wird und so ein kontinuierlicher Übergabe der Materialeigenschaft erreicht wird.

Eine schaltbare mehrflutige Strömungsleiteinrichtung ist so gestaltet, dass die Schwenkachse der Klappe in Strömungsrichtung beabstandet von der Durchströmöffnung einer der Fluten und bezüglich dieser außenseitig an Strömungsleitmitteln angelenkt ist. Dabei erfolgt das Anlenken vorzugsweise derart, dass das distale Klappensegment in einer Endlage der Schwenkbewegung um die Schwenkachse herum in dichtender Anlage an die Durchströmöffnung dieser Flut gelangt.

Durch diese Art der Anordnung der Klappe innerhalb der Strömungsleiteinrichtung wird eine bevorzugte und in Strömungsrichtung kurz bauende Ausführung erreicht.

Gemäß vorteilhafter Ausgestaltung ist die Strömungsleiteinrichtung so geformt, dass sie, in der anderen, einen Endanschlag bildenden Stellung der Klappe, dichtend an der Durchströmöffnung einer anderen Flut anliegt. Gemäß einer vorteilhaften Ausgestaltung ist die Kontur der Strömungsleitmittel dieser anderen Flut im in Strömungsrichtung gesehen vor der Durchströmöffnung liegenden Bereich derart geformt, dass eine Schwenkstellung existiert, in der die Kontur der Klappe wenigstens bereichsweise der Kontur der Strömungsleitmittel folgt. Durch diese Maßnahme wird die Möglichkeit geschaffen, dass die Klappe mit ihrer Außenkontur an Strömungsleitmitteln anliegt. Die Strömungsleitmittel dienen in diesem Abschnitt als Aufnahme für die Klappe.

Gemäß bevorzugter Ausführungsform dient die Klappe dem Leiter einer Luftströmung zwischen zwei Fluten, wobei die eine Flut Funktionselemente enthält und die andere Flut einen Bypass zu diesen Funktionselementen bildet. Bei den Funktionselementen handelt es sich gemäß weiterführender Ausgestaltung um Wärmetauscher oder aktive Heizelemente für den Luftstrom.

Im Übrigen ist die Erfindung nachfolgend auch anhand des in der Zeichnung dargestellten Ausführungsbeispieles näher erläutert; dabei zeigt:
- Fig. 1: in perspektivischer Darstellung ein Ausführungsbeispiel einer erfindungsgemäßen Klappe;
- Fig. 2: eine Querschnittsdarstellung durch die Klappe gemäß Fig. 1 sowie schematische Darstellung anderer Klappenprofile;
- Fig. 3: eine Strömungsleiteinrichtung für eine Fahrzeugklimaanlage; und
- Fig. 4: eine schematische Schnittdarstellung einer Strömungsleiteinrichtung für eine Fahrzeugklimaanlage mit anderem Klappenprofil.

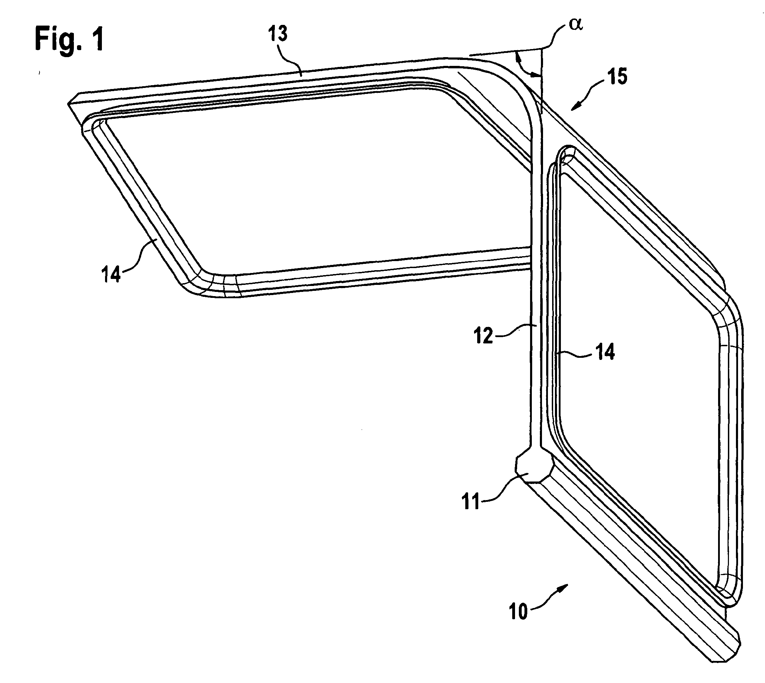

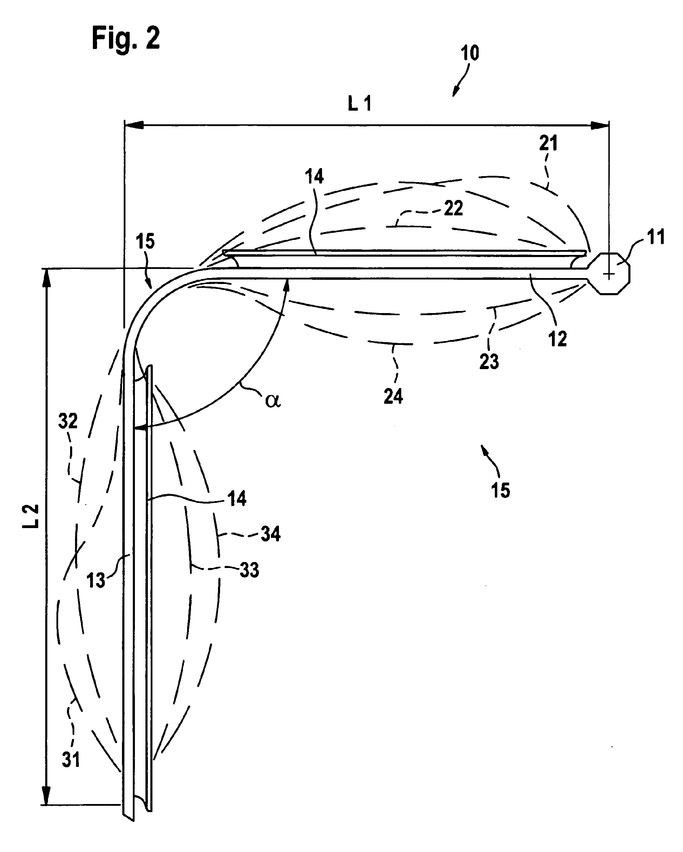

Die Fig. 1 und 2 zeigen in perspektivischer bzw. in Querschnittsdarstellung eine Klappe 10. Die Klappe 10 wird gebildet aus der Schwenkachse 11 und den abragenden Klappensegmenten 12 und 13. Das Klappensegment 12 grenzt unmittelbar an die Schwenkachse 11 an und bildet das proximale Klappensegment 12, während das weitere Klappensegment 13 bezüglich dem ersten Klappensegment 12 distal zur Schwenkachse 11 angeordnet ist. Jedes der Klappensegmente weist ein Dichtprofil 14 auf, welches einen geschlossenen Konturenzug auf der Fläche des entsprechenden Klappensegmentes 12 bzw. 13 bildet.

Die Fig. 1 zeigt eine Klappe, bei der die beiden Klappensegmente 12 und 13 als plane, flächige Elemente ausgebildet sind, wobei zur Herstellung der insgesamt konkaven Form im Übergang zwischen den beiden Elementen eine Knickstelle 15 ausgebildet ist, in der die beiden Klappensegmente 12 und 13 einen Innenwinkel α aufweisen, der geringer ist als 180°. In dem dargestellten Ausführungsbeispiel handelt es sich bei dem Innenwinkel um einen rechten Winkel.

Die Fig. 2 zeigt als Hauptdarstellung eine Schnittdarstellung durch die in der Fig. 1 gezeigte Klappe 10. Auch hier ist die Schwenkachse 11, das proximale Klappensegment 12 sowie das distale Klappensegment 13, das einen Winkel α zu dem proximalen Klappensegment aufweist, gezeigt. Dabei ist ein Bereich einer Knickstelle 15 ausgebildet.

Daneben zeigt jeweils in gestrichelter Darstellung die Schnittdarstellung 15 noch abweichende Gestaltungsmöglichkeiten sowohl des Flächen- als auch des Schnittprofils der Klappe. Dabei haben die dargestellten Flächen- und Schnittprofile die Eigenart, dass sie alle im Bereich der Knickstelle eine gemeinsamen Verlauf aufweisen und somit eine unterschiedliche Kombination von Profilen für die beiden Klappensegmente 12 und 13 verwendbar ist. Die alternativen Profile wurden mit den Bezugszeichen 21 bis 24 im Bereich des proximalen Klappensegments 12 sowie mit den Bezugszeichen 31 bis 34 im Bereich des distalen Klappensegments 13 bezeichnet. Dabei folgen die beiden Profile 21 und 22 bzw. 31 und 32 jeweils der insgesamt konkaven Wölbung der Klappe 10, während die beiden alternativen Profile 23 und 24 bzw. 33 und 34 in Unterschied dazu zumindest teilweise konvex gekrümmt sind. Die Profile 33 und 22 ergänzen sich dabei so, dass, wenn es sich dabei um das Schnittprofil der Klappensegmente 12 und 13 handeln würde, dass insgesamt eine ungefähr elliptische Gesamtform der Kontur der Klappe mit ihren Klappensegmenten 12 und 13 gegeben wäre. Im Übrigen kann der Verlauf des Flächenprofils bzw. Schnittprofils im Wesentlichen an strömungsbetttechnische Bedürfnisse sowie verfügbare Bauräume angepasst werden. Eine strömungsoptimierte Anpassung des Flächen- bzw. Schnittprofils bewirkt im Wesentlichen eine gute Anlage des Dichtprofils an der gehäuseseitig die Durchströmöffnung umgebende Dichtfläche. Dies unterstützt das Herstellen einer guten Dichtfunktion, die insbesondere Durchströmgeräusche bei Spaltbildung zwischen Klappe und Durchströmöffnung vermeidet. Der Verlauf der Profile ergibt sich wie in den Zeichnungen durch die entsprechenden Linien gezeigt. Diese Darstellungen sind Beispiele, alternative Verläufe der Krümmung der Klappensegmente 12 und 13 sowohl im Hinblick der Ausgestaltung des Flächenprofils als auch des Schnittprofils sind denkbar und im Wesentlichen frei wählbar. Ebenso sind Winkel α zwischen dem proximalen Klappensegment 12 und dem distalen Klappensegment 13 möglich, die vom gezeigten rechten Winkel abweichen und insbesondere im Bereich zwischen 60° und 120° liegen können.

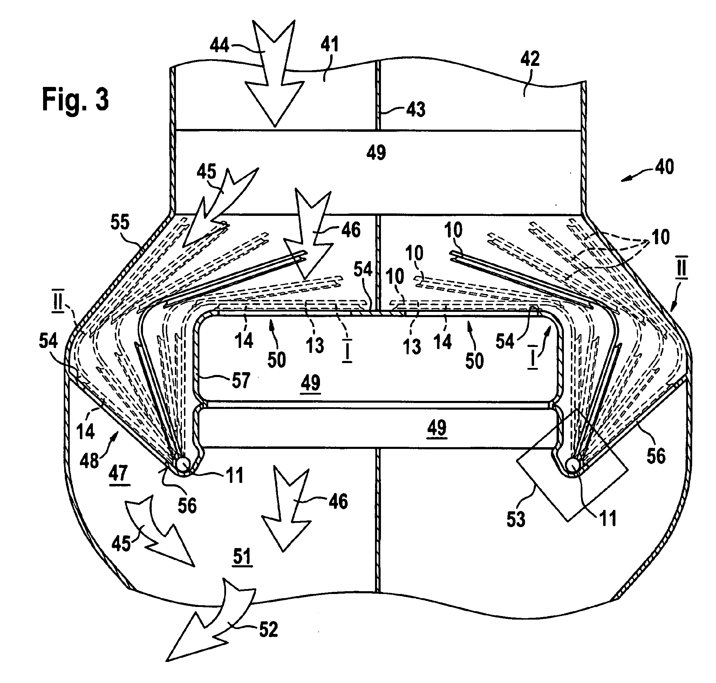

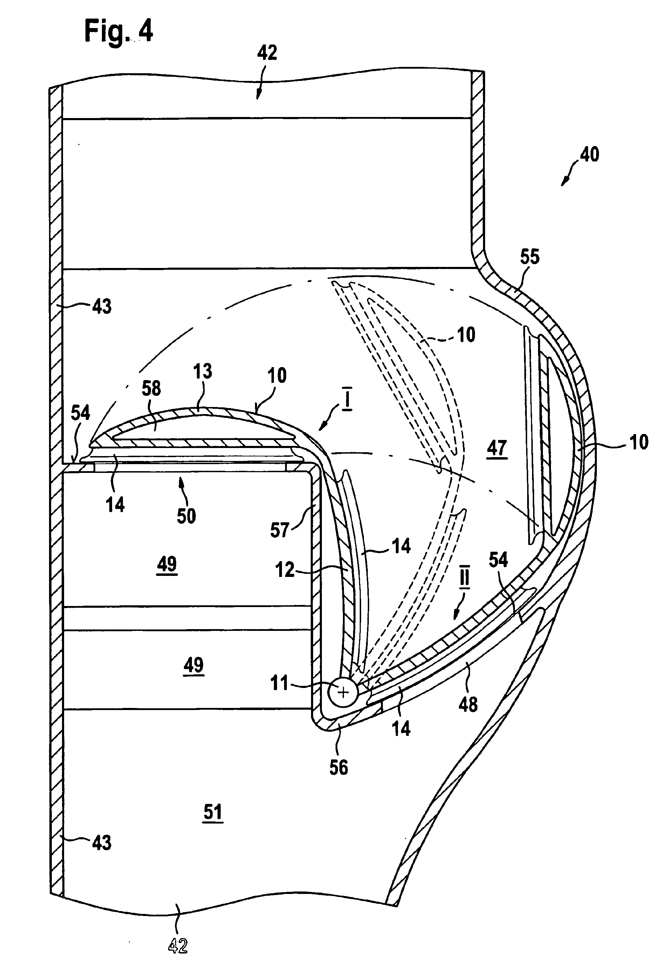

Die Fig. 3 und 4 zeigen jeweils ein Ausführungsbeispiel für die Verwendung einer erfindungsgemäßen Klappe im Bereich einer Fahrzeugklimaanlage 40. Dabei zeigt die Fig. 3 die beiden Kanäle 41 und 42, die durch eine Trennwand 43 voneinander getrennt sind und nachfolgend unterschiedlichen Fahrzeugseiten zugeordnet sind, während die Fig. 4 nur einen Kanal 42 und die Trennwand 43 zeigt, da auch hier der Aufbau des zweiten Kanals im Wesentlichen spiegelsymmetrisch zur Trennwand 43 ausgebildet sein kann.

Die Figuren zeigen jeweils die Anordnung einer Klappe 10 in unterschiedlichen Schwenkstellungen , jeweils in einem der Kanäle 41 und 42. Die Klappe 10 jedes der Kanäle 41, 42 dient dabei der Aufteilung eines anströmenden Luftstromes. 44, der in zwei Teilströme 45 und 46 aufgeteilt wird. Aus Vereinfachungsgründen ist dabei die Führung des Luftstromes sowie die Aufteilung in Teilströme durch entsprechende Strömungspfeile nur für den Fall des einen Kanals 41 in der Fig. 3 gezeichnet, eine entsprechende Führung der Luftströme in den Kanälen 42, die in Fig. 3 und Fig. 4 dargestellt sind, ergibt sich aber ohne weiteres durch entsprechende Übertragung.

Die beiden Teilströme treffen sich nach dem unterschiedlichen Strömungspfad im Bereich des Kollektorraumes 51 und können dann als Mischstrom 52 beispielsweise in den Fahrzeuginnenraum weisende Luftdüsen geführt werden und von dort austreten.

Die Ausgestaltungen von Klimaanlagen 40, wie sie in den Fig. 3 und 4 gezeigt sind, weisen die Besonderheit auf, dass der Abstand zwischen dem vom Luftstrom durchströmten Verdampfer 44 und dem als Funktionselement 49 nur von einem Teilstrom 46 durchströmten Heizkörper nur einen geringen Abstand in Strömungsrichtung aufweist. Die Möglichkeit, mit so geringer axialer Baulänge eine schaltbare, zweikanalige Ausführung herzustellen, wird durch die erfindungsgemäße Klappe 10 ermöglicht. Prinzipiell wird bei einer Fahrzeugklimaanlage der gesamte Luftstrom 44 durch einen Verdampfer geführt, wodurch der gesamte zugeführte Luftstrom abgekühlt und getrocknet wird. Zur Temperierung des Fahrzeuginnenraumes wird der vom Verdampfer konditionierte Luftstrom in zwei Teilströme 45 und 46 aufgeteilt, wobei der erste Teilstrom 45 durch einen ersten Kanal 47, einen Bypass zum Funktionselement 49 und der andere zweite Teilstrom 46 durch einen zweiten Kanal, der im Wesentlichen durch das Funktionselement 49 begrenzt wird, hindurchgeführt wird. Durch die Stellung der Klappe 10 wird dabei das Volumenstrom-Verhältnis der beiden Teilströme 45 und 46 zueinander verändert, so dass die sich in dem Kollektorraum 51 ausbildende Temperatur und Luftfeuchte des Mischstromes 52 der beiden Teilströme 45 und 46 stromabwärts des Funktionselements 49 steuern bzw. regeln lässt.

Die Klappe lässt sich durch ein auf die Schwenkachse 11 einwirkendes Stellglied 53, das in dem rechten Kanal 42 der Fig. 3 schematisch dargestellt ist, beeinflussen. Durch Verschwenken der Klappe 10 in eine Mittelstellung zwischen den beiden Endlagen I und II erfolgt die Aufteilung in Teilströme. In der Endlage I wird der gesamte Volumenstrom 44 durch den Bypass 47 hindurchgeführt. Dabei wird die Durchströmöffnung 50 durch das distale Klappensegment 13 verdeckt, wobei das bezüglich der konkaven Krümmung innenseitig angeordnete Dichtungsprofil 14 an einer Anlagefläche 54 anliegt, welche die Durchströmöffnung 50 umgibt. Dabei wird aufgrund des Strömungsdrucks der anströmenden Luftströmung 44 das distale Klappensegment 13 gegen die Durchströmöffnung 50 gedrückt, so dass eine gut dichtende Anlage gegeben ist.

In der Endlage II der Klappe 10 liegt das proximale Klappensegment an einer Abschlussfläche 56 an, die eine Durchströmöffnung 48 aufweist und den Bypass 47 hinsichtlich des durchströmbaren Querschnitts begrenzt. Dabei liegt das bezüglich der konkaven Krümmung der Klappe 10 außenseitig ausgebildete Dichtungsprofil 14 des proximalen Klappensegmentes 12 an Dichtflächen 54 der Abschlussfläche 56 an, die die Durchströmöffnung 48 begrenzt. Auch hier trifft ein anströmender Luftstrom auf die dem Dichtprofil 14 abgewandte Seite des Klappensegmentes 12, so dass durch den anströmenden Luftstrom ein Anpressen des Dichtprofils an die Dichtfläche 54 erreicht wird.

In den dargestellten Zwischenstellungen zwischen den beiden Endlagen I und II wird der Luftstrom wie durch die Strömungspfeile 45 und 46 angezeigt in Teilströme aufgeteilt, die zunächst durch das distale Klappensegment 13 geleitet entweder den Bypass 47 oder aber das Funktionselement 49, nämlich den Heizkörper und eventuell ein dem Heizkörper nachgeschaltetes weiteres aktives Heizelement durchströmen, bevor der Luftstrom in den Kollektorraum 51 gelangt.

Die Fig. 3 zeigt dabei die Anordnung von zwei Klappen in der gemäß Fig. 1 dargestellten Ausführungsform, wobei jede der beiden Klappen einem Kanal 41 bzw. 42 einer zweikanaligen Klimaanlage zugeordnet ist. Dabei bilden die Trennwand 43, das Gehäuse 55, die Abschlussfläche 56 und die Funktionselemente-Trennwand 57 die Strömungsleitmittel, die beiden Strömungskanäle 41 und 42 voneinander trennen und begrenzen. Dabei ist im dargestellten Ausführungsbeispiel das Gehäuse 55, das die Klimaanlage 40 nach außen hin abschließt, in diesem Bereich so ausgeführt, dass in der Endlage II die Kontur des Gehäuses so geführt ist, dass das distale Klappensegment 13 im Wesentlichen am Gehäuse 55 anliegt. Hierdurch wird insbesondere vermieden, dass zwischen distalem Klappensegment 13 und Gehäuse 55 ein Teilstrom bis in den Bereich des Dichtungsprofils 14 geführt ist, so dass eine Luftströmung im Bereich dieser Dichtstelle anströmt und so die Gefahr des Entstehens eines unerwünschten Nebenstromes verringert wird.

In der Fig. 3 ist eine Ausführung gezeigt, bei der eine Klimaanlage zwei Kanäle 41 und 42 aufweist, wobei in jedem der beiden Kanäle 41 und 42 eine Klappe 10 gemäß der Darstellung in Fig. 1 Verwendung findet.

Die Fig. 4 zeigt dagegen eine Anordnung, bei der die Klappensegmente 12 und 13 sich zu einer kontinuierlich gekrümmten, im Wesentlichen ellipsoiden Kontur ergänzen. Dabei weist das proximale Klappensegment im Schnittprofil eine konkave Wölbung auf, während quer dazu eine zylindrische Erstrekkung gegeben ist. Durch entsprechende Gestaltung und Wölbung der Abschlussfläche 56 des Bypass 47 wird trotz des gewölbten Schnittprofils ohne weitere Anpassungsmaßnahmen eine dichtende Anlage des Dichtprofils 14 an der zugeordneten Dichtfläche 54 ermöglicht. Dagegen wird im Bereich des distalen Klappensegments 13 zur Ergänzung des Flächenprofils an der Vorder- und Rückseite jeweils eine Seitenwand 58 benötigt, welche den Raum zwischen dem planen Verlauf der Dichtfläche 14 und dem gewölbten Verlauf des distalen Klappensegments 13 - in axialer Richtung der Schwenkachse 11 gesehen - ergänzt. Im Übrigen entspricht die Gestaltung der Einrichtung gemäß der Fig. 4 derjenigen der Fig. 1, so dass das vorstehend gesagte hierfür entsprechend gilt.

## Patentansprüche

1. Schaltbare, mehrflutige Strömungsleiteinrichtung mit einer Klappe zur Aufteilung eines Luftstroms (44) in zwei Teilströme (45,46) für Luftkanäle,
wobei stromabwärts der Klappe (10) eine mehrflutige Strömungsleitung in einem Gehäuse erfolgt, wobei Fluten (47, 49) durch Strömungsleitmittel (43, 55, 56, 57) begrenzt werden, welche eine Durchströmöffnung (50, 48) aufweisen, wobei die Klappe (10) eine Schwenkachse (11) zum schwenkbaren Anordnen in dem Gehäuse und Dichteinrichtungen zur luftdichten Anlage an wenigstens einer Durchströmöffnung (50, 48) aufweist, wobei die Stellung der Klappe (10) dem schaltbaren Leiten der Teilströme bzw. der mehreren Fluten dient, wobei
die Schwenkachse (11) der Klappe (10) randständig ausgebildet ist und die von ihr transversal abragende Klappe (10) zwei hintereinanderliegende Klappensegmente (12, 13) aufweist von denen jedes wenigstens eine Dichteinrichtung zur luftdichten Anlage an einer Durchströmöffnung (50, 48) aufweist und die Klappe eine insgesamt konkav gekrümmte Kontur aufweist,
**dadurch gekennzeichnet,**
**dass** die Schwenkachse (11) in Strömungsrichtung beabstandet von der Durchströmöffnung (50, 48) einer der Fluten (47, 49) und bezüglich dieser außenseitig an Strömungsleitmitteln (43, 55, 56, 57) angelenkt ist, wobei in einer ersten Endlage der Klappe eine erste Durchströmöffnung (50) eines ersten Teilstroms (46) durch das zur Schwenkachse distale Klappensegment (13) und in einer zweiten Endlage der Klappe eine zweite Durchströmöffnung (48) eines zweiten Teilstroms (45) durch das zur Schwenkachse proximale Klappensegment (12) vollständig verdeckt wird.

2. Strömungsleiteinrichtung nach Anspruch 1,
wobei das Anlenken der Klappe vorzugsweise derart erfolgt, dass das distale Klappensegment (13) in einer Endlage der Schwenkbewegung um die Schwenkachse herum in dichtende Anlage an die Durchströmöffnung (50) der Flut gelangt.

3. Strömungsleiteinrichtung nach einem der vorhergehenden Ansprüche,
**dadurch gekennzeichnet,**
**dass** die Außenkontur der konkaven Klappe, insbesondere mit dem zur Schwenkachse proximalen Klappensegment (12) in einer anderen Schwenkstellung dichtend an der Durchströmöffnung (50) einer anderen Flut anliegt.

4. Strömungsleiteinrichtung nach einem der vorhergehenden Ansprüche,
**dadurch gekennzeichnet,**
**dass** die Kontur der Strömungsleitmittel der anderen Flut im in Strömungsrichtung gesehen vor der Durchströmöffnung derartig geformt ist, dass eine Schwenkstellung existiert, in der die Kontur der Klappe (10) wenigstens bereichsweise der Kontur der Strömungsleitmittel folgt.

5. Strömungsleiteinrichtung nach einem der vorhergehenden Ansprüche,
**dadurch gekennzeichnet,**
**dass** die Klappe (10) dem Leiten einer Luftströmung zwischen zwei Fluten dient, wobei die eine Flut Funktionselemente beinhaltet, wobei die andere Flut einen Bypass bildet.

6. Strömungsleiteinrichtung nach Anspruch 5,
**dadurch gekennzeichnet,**
**dass** die Funktionselemente der Menge der Wärmetauscher und Heizelemente angehören.

7. Strömungsleiteinrichtung nach Anspruch 5 oder 6,
**dadurch gekennzeichnet,**
**dass** die Funktionselemente enthaltende Flut mittig angeordnet ist, wobei beidseitig jeweils eine weitere Flut als Bypass vorgesehen ist, die Funktionselemente enthaltende Flut zwei symmetrisch angeordnete Durchströmöffnungen aufweist, wobei je eine Klappe (10) zum Steuern des Luftstroms (44) zwischen einem der beiden Durchströmöffnungen der Funktionselemente enthaltenden Flut und der benachbarten, einen Bypass bildenden Flut dient.

8. Strömungsleiteinrichtung nach einem der vorhergehenden Ansprüche,
**dadurch gekennzeichnet,**
**dass** jedes Klappensegment (12, 13) der Klappe genau eine Dichteinrichtung zur luftdichten Anlage an einer Durchströmöffnung (50) aufweist.

9. Strömungsleiteinrichtung nach einem der vorhergehenden Ansprüche,
**dadurch gekennzeichnet,**
**dass** die Dichteinrichtungen auf voneinander verschiedenen Seiten der Klappe (10) angeordnet sind, wobei vorzugsweise das zur Schwenkachse (11) distale Klappensegment (13) die Dichteinrichtung auf der innenliegenden Seite der insgesamt konkaven Kontur aufweist.

10. Strömungsleiteinrichtung nach einem der vorhergehenden Ansprüche,
**dadurch gekennzeichnet,**
**dass** die Kontur der Klappe (10) im Wesentlichen ellipsoid ausgebildet ist.

11. Strömungsleiteinrichtung nach Anspruch 10,
**dadurch gekennzeichnet,**
**dass** der Bereich größerer Krümmung am distalen Ende der Klappe (10) ausgebildet ist, wobei in die Kontur der Ellipse in diesem Bereich zugehörigen Klappensegment (12, 13) eine im Wesentlichen plan ausgerichtete Dichteinrichtung ausgebildet ist, wobei vorzugsweise lateral Seitenwände die Dichteinrichtung mit dem Klappensegment (12, 13) verbinden, um einen fluiddichten Abschluss zu bilden.

12. Strömungsleiteinrichtung nach einem der Ansprüche 1 bis 9,
**dadurch gekennzeichnet,**
**dass** die Klappensegmente (12, 13) zueinender in einem Winkel stehen, wobei der Innenwinkel kleiner als 180°, vorzugsweise kleiner als 120° ist und insbesondere im Bereich von 90° liegt.

13. Strömungsleiteinrichtung nach Anspruch 12,
**dadurch gekennzeichnet,**
**dass** die Klappensegmente (12, 13) jeweils aus einem vorzugsweise planen, einseitig eine Dichteinrichtung aufweisenden Element gebildet sind.

14. Strömungsleiteinrichtung nach Anspruch 12,
**dadurch gekennzeichnet,**
**dass** die Klappensegmente (12, 13) in sich gewölbt geformt sind, wobei diese vorzugsweise zylindermantelförmig sind.

15. Strömungsleiteinrichtung nach einem der vorhergehenden Ansprüche,
**dadurch gekennzeichnet,**
**dass** die Klappe (10) im Mehrkomponentenspritzgussverfahren hergestellt ist, wobei die Dichteinrichtung (14) als Dichtprofil, bzw. Dichtlippe, ausgebildet ist, welche an einer strömungsleitmittelseitig ausgebildeten Dichtfläche (54) zur Anlage kommt.

## Claims

1. Switchable, multi-conduit flow guiding device having a flap (10) for dividing an air flow (44) into two part flows (45, 46) for air channels, multi-conduit flow conduction taking place in a housing downstream of the flap (10), conduits (47, 49) being delimited by flow guide means (43, 55, 56, 57) which have a through-flow orifice (50, 48), the flap (10) having an axis of pivoting (11) so that it can be positioned in the housing such that it is able to pivot, and sealing devices so that it can make an airtight bearing contact against at least one through-flow orifice (50, 48), the position of the flap (10) serving to permit the switchable conduction of the air flow or the plurality of conduits, the axis of pivoting (11) of the flap (10) being formed at the edge and the flap (10) which projects transversally from said axis of pivoting having two flap segments (12, 13) which lie one behind the other, each of which has at least one sealing device making an airtight bearing contact against a through-flow orifice (50), and the flap having a generally concavely curved contour,
**characterised in that**
the axis of pivoting (11) is articulated on flow guide means (43, 55, 56, 57) spaced a certain distance in the direction of flow from the through-flow orifice (50) of one of the conduits (47, 49) and on the outside with respect to the latter.

2. Flow guiding device in accordance with claim 1,
articulation preferably taking place in such a manner that, in one end position of the pivoting movement about the axis of pivoting, the distal flap segment (13) forms a sealing bearing contact against the through-flow orifice (50) of the conduit.

3. Flow guiding device in accordance with one of the preceding claims,
**characterised in that**
in another pivoting position the flap segment (12) proximal to the axis of pivoting in particular of the outer contour of the concave flap forms a seal against the through-flow orifice (50) of another conduit.

4. Flow guiding device in accordance with one of the preceding claims,
**characterised in that**
the contour of the flow guide means of the other conduit upstream of the through-flow orifice when seen in the direction of flow is shaped such that there is a pivoting position in which at least certain sections of the contour of the flap (10) follow the contour of the flow guide means.

5. Flow guiding device in accordance with one of the preceding claims,
**characterised i n that**
the flap (10) serves to conduct an airflow between two conduits, one conduit containing functional elements while the other conduit forms a bypass.

6. Flow guiding device in accordance with claim 5,
**characterised in that**
the functional elements belong to the set of heat exchangers and heating elements.

7. Flow guiding device in accordance with claim 5 or 6,
**characterised in that**
the conduit containing functional elements is arranged centrally, a further conduit being provided on either side as a bypass and the conduit containing functional elements having two symmetrically arranged through-flow orifices, a flap (10) serving to control the air flow (44) between one of the two through-flow orifices of the conduit containing functional elements and the adjacent conduit which forms a bypass.

8. Flow guiding device in accordance with one of the preceding claims,
**characterised in that**
each flap segment (12, 13) of the flap has exactly one sealing device for making an airtight bearing contact against a through-flow orifice (50).

9. Flow guiding device in accordance with one of the preceding claims,
**characterised in that**
the sealing devices are arranged on different sides of the flap (10), the flap segment (13) distal to the axis of pivoting (11) preferably having the sealing device on the inside of the generally concave contour.

10. Flow guiding device in accordance with one of the preceding claims,
**characterised in that**
the contour of the flap (10) is of essentially ellipsoidal design.

11. Flow guiding device in accordance with claim 10,
**characterised in that**
the region of greater curvature is formed at the distal end of the flap (10), a sealing device of essentially planar orientation being formed into the contour of the ellipse in this region of the associated flap segment (12, 13), side walls connecting the sealing device to the flap segment (12, 13) preferably laterally in order to form a fluid-tight closure.

12. Flow guiding device in accordance with one of claims 1 to 9,
**characterised in that**
the flap segments (12, 13) lie at an angle to one another, the internal angle being less than 180°, preferably less than 120°, and in particular in the region of 90°.

13. Flow guiding device in accordance with claim 12,
**characterised in that**
the flap segments (12, 13) are each formed from a preferably planar element having a sealing device on one side.

14. Flow guiding device in accordance with claim 12,
**characterised in that**
the flap segments (12, 13) are intrinsically curved in shape and are preferably shaped like the outer surface of a cylinder.

15. Flow guiding device in accordance with one of the preceding claims,
**characterised in that**
the flap (10) is produced by the multi-component injection moulding method, the sealing device (14) being designed as a sealing profile or sealing lip which comes to bear against a sealing surface (54) formed on the side of the flow guide means.

## Revendications

1. Dispositif déflecteur de l'écoulement, activable et à flux multiples, comprenant un volet servant à la répartition d'un flux d'air (44), en deux flux partiels (45, 46), pour des conduits d'air, où en aval du volet (10), dans un carter, il se produit un guidage d'écoulement à flux multiples, où des flux (47, 49) sont limités par des moyens déflecteurs de l'écoulement (43, 55, 56, 57), flux qui présentent une ouverture de passage (50, 48), où le volet (10) présente un axe de pivotement (11) servant à l'agencement pivotant dans le carter, et des dispositifs d'étanchéité servant à l'application, étanche à l'air, sur au moins une ouverture de passage (50, 48), où la position du volet (10) sert au guidage activable des flux partiels ou des flux multiples, où l'axe de pivotement (11) du volet (10) est configuré de façon périphérique, et le volet (10) dépassant transversalement de l'axe de pivotement présente deux segments de volet (12, 13) placés l'un derrière l'autre, segments de volet dont chacun présente au moins un dispositif d'étanchéité servant à l'application, étanche à l'air, sur une ouverture de passage (50, 48), et le volet présente un contour ayant dans l'ensemble une forme courbe concave, **caractérisé en ce que** l'axe de pivotement (11), dans la direction d'écoulement, est espacé de l'ouverture de passage (50, 48) de l'un des flux (47, 49) et articulé extérieurement sur des moyens déflecteurs de l'écoulement (43, 55, 56, 57), par rapport à cette ouverture de passage, où, dans une première position de fin de course du volet, une première ouverture de passage (50) d'un premier flux partiel (46) est recouverte complètement par le segment de volet (13) distal par rapport à l'axe de pivotement et, dans une deuxième position de fin de course du volet, une deuxième ouverture de passage (48) d'un deuxième flux partiel (45) est complètement recouverte par le segment de volet (12) proximal par rapport à l'axe de pivotement.

2. Dispositif déflecteur de l'écoulement selon la revendication 1, où l'articulation du volet est réalisée, de préférence, de manière telle, que le segment de volet distal (13), dans une position de fin de course du mouvement de pivotement tout autour de l'axe de pivotement, vienne en appui étanche sur l'ouverture de passage (50) du flux.

3. Dispositif déflecteur de l'écoulement selon l'une ou l'autre des revendications précédentes, **caractérisé en ce que** le contour extérieur du volet concave, en particulier avec le segment de volet (12) proximal par rapport à l'axe de pivotement, s'appuie de façon étanche sur l'ouverture de passage (50) d'un autre flux, dans une autre position de pivotement.

4. Dispositif déflecteur de l'écoulement selon l'une quelconque des revendications précédentes, **caractérisé en ce que** le contour des moyens déflecteurs de l'écoulement de l'autre flux, vu dans la direction d'écoulement, est formé, en amont de l'ouverture de passage, de manière telle, qu'il existe une position de pivotement dans laquelle le contour du volet (10) suit, au moins par zones, le contour des moyens déflecteurs de l'écoulement.

5. Dispositif déflecteur de l'écoulement selon l'une quelconque des revendications précédentes, **caractérisé en ce que** le volet (10) sert au guidage d'un écoulement d'air entre deux flux, où l'un des flux comprend des éléments fonctionnels, l'autre flux formant une dérivation.

6. Dispositif déflecteur de l'écoulement selon la revendication 5, **caractérisé en ce que** les éléments fonctionnels font partie du nombre des échangeurs de chaleur et des éléments chauffants.

7. Dispositif déflecteur de l'écoulement selon la revendication 5 ou 6, **caractérisé en ce que** le flux comprenant des éléments fonctionnels est disposé au milieu, où il est prévu à chaque fois, des deux côtés, un autre flux servant de dérivation, où le flux comprenant des éléments fonctionnels présente deux ouvertures de passage disposées de façon symétrique, où à chaque fois un volet (10) sert à la régulation du flux d'air (44) entre l'une des deux ouvertures de passage du flux comprenant des éléments fonctionnels, et le flux voisin formant une dérivation.

8. Dispositif déflecteur de l'écoulement selon l'une quelconque des revendications précédentes, **caractérisé en ce que** chaque segment (12, 13) du volet présente précisément un dispositif d'étanchéité pour l'application, étanche à l'air, sur une ouverture de passage (50).

9. Dispositif déflecteur de l'écoulement selon l'une quelconque des revendications précédentes, **caractérisé en ce que** les dispositifs d'étanchéité sont disposés sur des côtés - différents l'un de l'autre - du volet (10) où, de préférence, le segment de volet (13) distal par rapport à l'axe de pivotement (11) présente le dispositif d'étanchéité placé sur le côté intérieur du contour ayant dans l'ensemble une forme concave.

10. Dispositif déflecteur de l'écoulement selon l'une quelconque des revendications précédentes, **caractérisé en ce que** le contour du volet (10) est configuré sensiblement de façon ellipsoïdale.

11. Dispositif déflecteur de l'écoulement selon la revendication 10, **caractérisé en ce que** la zone de plus grande courbure est formée au niveau de l'extrémité distale du volet (10), où un dispositif d'étanchéité, orienté sensiblement de façon plane, est formé dans le contour de l'ellipse, dans le segment de volet (12, 13) faisant partie de cette zone, où de préférence des parois latérales relient le dispositif d'étanchéité au segment de volet (12, 13), pour former une fermeture étanche au fluide.

12. Dispositif déflecteur de l'écoulement selon l'une quelconque des revendications 1 à 9, **caractérisé en ce que** les segments de volet (12, 13) sont disposés en formant un angle l'un par rapport à l'autre, l'angle intérieur étant inférieur à 180°, de préférence inférieur à 120°, se situant en particulier dans la plage angulaire à peu près égale à 90°.

13. Dispositif déflecteur de l'écoulement selon la revendication 12, **caractérisé en ce que** les segments de volet (12, 13) sont formés à chaque fois par un élément, de préférence plan, présentant, sur un côté, un dispositif d'étanchéité.

14. Dispositif déflecteur de l'écoulement selon la revendication 12, **caractérisé en ce que** les segments de volet (12, 13) sont formés de façon en soi bombée, ces segments de volet ayant, de préférence, une forme de corps de cylindre.

15. Dispositif déflecteur de l'écoulement selon l'une quelconque des revendications précédentes, **caractérisé en ce que** le volet (10) est fabriqué en utilisant le procédé de moulage par injection de composants multiples, où le dispositif d'étanchéité (14) est configuré comme un profilé d'étanchéité, ou lèvre d'étanchéité, qui vient en appui sur une surface d'étanchéité (54) configurée du côté des moyens déflecteurs de l'écoulement.
